# EUROPEAN PATENT APPLICATION

(11) **EP 4 497 779 A1**
(43) Date of publication of application: **29.01.2025**
(21) Application number: 24189311.4
(22) Date of filing: 18.07.2024
(51) Int. Cl.: C08J 9/00, C08J 9/12, C08J 9/16, C08J 9/18, C08J 9/232, C08K 3/04

(54) **METHOD FOR PRODUCING POLYAMIDE-BASED RESIN EXPANDED BEADS AND METHOD FOR PRODUCING POLYAMIDE-BASED RESIN EXPANDED MOLDED ARTICLE**

(30) Priority: 27.07.2023 JP 2023122443
(71) Applicant: JSP Corporation, Tokyo 100-0005 (JP)
(72) Inventor: HAYASHI, Tatsuya, Yokkaichi-shi, 510-0881 (JP)
(74) Representative: Kramer Barske Schmidtchen Patentanwälte PartG mbB

(57) **Abstract**

A polyamide-based resin melt obtained by melt-kneading a base resin, an organic compound-based additive (A), and an iodide-based additive (X) is granulated to prepare polyamide-based resin particles. The polyamide-based resin particles are expanded by using a physical blowing agent to produce polyamide-based resin expanded beads. The polyamide-based resin expanded beads are in-mold molded to produce a polyamide-based resin expanded molded article. The organic compound-based additive (A) is made of a hindered phenol-based compound and/or an organophosphorus-based compound. The iodide-based additive (X) is made of copper iodide, or copper iodide and potassium iodide.

## Description

### BACKGROUND OF THE INVENTION

### Field of the Invention

The present invention relates to a method for producing polyamide-based resin expanded beads containing a polyamide-based resin as a base resin, and a method for producing a polyamide-based resin expanded molded article.

### Description of Related Art

Polyamide-based resins are known to have high heat resistance, and be also excellent in abrasion resistance, chemical resistance, and the like. An expanded molded article made by expanding this polyamide-based resin can be lightweight while maintaining excellent properties such as heat resistance, abrasion resistance, and chemical resistance. Therefore, polyamide-based resin expanded molded articles are expected to be used in automobile parts and other applications.

In order to further improve the heat resistance of polyamide-based resin expanded molded articles, the addition of heat resistant agents such as copper iodide is being considered. For example, WO 2020/196893 A proposes a technique in which polyamide-based resin expanded beads contain a base metal element-containing compound, and WO 2020/196893 A describes that such a technique allows polyamide-based resin expanded beads with excellent thermal stability to be obtained.

### SUMMARY OF THE INVENTION

However, the heat resistance of the polyamide-based resin expanded molded article is improved by including a base metal element-containing compound such as copper iodide, but there is still room for improvement in moldability. Specifically, in a case where polyamide-based resin expanded beads containing a heat resistant agent such as copper iodide is in-mold molded to provide a molded article, the secondary expandability is poor, and the gaps between expanded beads are not filled, resulting in poor surface properties of the molded article. Thus, there has been room for improvement in the surface properties of the molded article. Particularly, in the corner portions of the molded article, there has been a problem of causing the molded article that is likely to become a polyamide-based resin expanded beads molded article with poor secondary expandability and poor surface properties.

The present invention has been made in view of such a circumstance, and provides a method for producing polyamide-based resin expanded beads that allows production of a polyamide-based resin expanded molded article having excellent heat resistance with excellent moldability, and a method for producing a polyamide-based resin expanded molded article with the polyamide-based resin expanded beads.

One aspect of the present invention is the method for producing polyamide-based resin expanded beads according to [1] to [5] below.
[1] A method for producing polyamide-based resin expanded beads containing a polyamide-based resin as a base resin, the method comprising:
   preparing polyamide-based resin particles by granulating a polyamide-based resin melt obtained by melt-kneading the base resin, an organic compound-based additive (A) made of a hindered phenol-based compound (A1) and/or an organophosphorus-based compound (A2), and an iodide-based additive (X) made of a copper iodide, or made of copper iodide and potassium iodide; and
   producing polyamide-based resin expanded beads by expanding the polyamide-based resin particles with a blowing agent, wherein
   an addition amount of the organic compound-based additive (A) is 0.05 parts by mass or more and 5 parts by mass or less with respect to 100 parts by mass of the base resin, and
   a ratio of the addition amount of the organic compound-based additive (A) with respect to an addition amount of the iodide-based additive (X) is 0.3 or more and 7 or less.
[2] The method for producing polyamide-based resin expanded beads according to [1], wherein the ratio of the addition amount of the organic compound-based additive (A) with respect to the addition amount of the iodide-based additive (X) is 1 or more and 4 or less.
[3] The method for producing polyamide-based resin expanded beads according to [1] or [2], wherein the polyamide-based resin melt contains the hindered phenol-based compound (A1) and the organophosphorus-based compound (A2) as the organic compound-based additive (A), and a ratio of an addition amount of the organophosphorus-based compound (A2) with respect to an addition amount of the hindered phenol-based compound (A1) is 0.5 or more and 2 or less.
[4] The method for producing polyamide-based resin expanded beads according to any one of [1] to [3] wherein an addition amount of the iodide-based additive (X) is 0.1 parts by mass or more with respect to 100 parts by mass of the base resin.
[5] The method for producing polyamide-based resin expanded beads according to any one of [1] to [4], wherein the polyamide-based resin melt further contains carbon black, and an addition amount of the carbon black is 0.5 parts by mass or more and 10 parts by mass or less with respect to 100 parts by mass of the base resin.

Another aspect of the present invention is the method for producing a polyamide-based resin expanded molded article according to [6] below.
[6] A method for producing a polyamide-based resin expanded molded article, whrerein the polyamide-based resin expanded molded article is produced by in-mold molding of polyamide-based resin expanded beads produced by the method according to any one of [1] to [5].

The method for producing the expanded beads can provide a method for producing polyamide-based resin expanded beads that allows production of a polyamide-based resin expanded molded article having excellent heat resistance with excellent moldability. In addition, the method for producing the molded article can provide a method for producing a polyamide-based resin expanded beads molded article that allows production of a polyamide-based resin expanded molded article having excellent heat resistance with excellent moldability.

### DETAILED DESCRIPTION OF PREFERRED EMBODIMENTS

In the present description, "polyamide-based resin particles" may be referred to as "resin particles", "polyamide-based resin expanded beads" may be referred to as "expanded beads", and a "polyamide-based resin expanded molded article" may be referred to as a "molded article". In addition, in the present description, when "to" is used as an expression representing a numerical range, it is used in a meaning that includes the numerical values described before and after it.

### Method for producing expanded beads

Expanded beads are produced by the following preparation step and expansion step, and are used, for example, to produce a molded article. The preparation step is a step of preparing polyamide-based resin particles. The preparation step is a step of granulating a polyamide-based resin melt obtained by melt-kneading a base resin, an organic compound-based additive (A) made of a hindered phenol-based compound (A1) and/or an organophosphorus-based compound (A2), and an iodide-based additive (X) made of copper iodide or, copper iodide and potassium iodide. In the preparation step, all operations can be performed in one step, but the preparation step can also be performed by being divided into, for example, a melt-kneading step and a granulation step as described below.

In the melt-kneading step, a polyamide-based resin melt is obtained by melt-kneading the base resin, the organic compound-based additive (A), and the iodide-based additive (X). The organic compound-based additive (A) means an organic compound made of a hindered phenol -based compound and/or an organophosphorus-based compound, indicating a concept that does not include organic compounds other than the hindered phenol -based compound and the organophosphorus-based compound. The iodide-based additive (X) means copper iodide, or a metal iodide made of copper iodide and potassium iodide, indicating a concept that does not include metal iodides other than copper iodide and potassium iodide. The iodide-based additive (X) means copper iodide when potassium iodide is not used, and means copper iodide and potassium iodide when potassium iodide is used with copper iodide.

In the granulation step, polyamide-based resin particles are obtained by granulating the polyamide-based resin melt. In the expansion step, polyamide-based resin expanded beads are obtained by expanding polyamide-based resin particles with a blowing agent. Each step will be explained in detail below.

### Melt-kneading step

### Base resin

In the melt-kneading step, a polyamide-based resin is used as the base resin of expanded beads, and the base resin is melt-kneaded together with the organic compound-based additive (A) and the iodide-based additive (X). The base resin means, for example, a resin, a content of which is more than 50% by mass among the resins constituting the expanded beads. The content of the polyamide-based resin among the resins constituting the expanded beads is preferably 70% by mass or more, more preferably 80% by mass or more, and still more preferably 90% by mass or more. It is particularly preferable that the resin constituting the expanded beads be substantially made only of the polyamide-based resin.

As the polyamide-based resin, for example, polyamide or a polyamide copolymer is used.

Examples of the polyamide include homopolymers such as poly(6-aminohexanoic acid), also known as poly(caprolactam) (also known as polycaproamide, nylon 6), poly(laurolactam) (also known as nylon 12), poly(hexamethylene adipamide) (also known as nylon 66), poly(7-aminoheptanoic acid) (also known as nylon 7), poly(8-aminooctanoic acid) (also known as nylon 8), poly(9-aminononanoic acid) (also known as nylon 9), poly(10-aminodecanoic acid) (also known as nylon 10), poly(11-aminoundecanoic acid) (also known as nylon 11), poly(hexamethylene sebacamide) (also known as nylon 610), poly(decamethylene sebacamide) (also known as nylon 1010), poly(hexamethylene azelamide) (also known as nylon 69), poly(tetramethylene adipamide) (also known as nylon 46), poly(tetramethylene sebacamide) (also known as nylon 410), poly(pentamethylene adipamide) (also known as nylon 56), and poly(pentamethylene sebacamide) (also known as nylon 510). The polyamide copolymer means a copolymer containing two or more of repeating units and having an amide bond in at least a portion of each repeating unit. Examples of the polyamide copolymer include polycaproamide/polyhexamethyleneadipamide copolymer (also known as nylon 6/66), caprolactam/hexamethylenediaminoadipic acid/lauryllactam (also known as nylon 6/66/12) copolymer, and caprolactam/lauryllactam copolymer (also known as nylon 6/12). As the polyamide-based resin, these polyamides and polyamide copolymers may be used singly, or may be used in combination of two or more. Among the above polyamide-based resins, the resin is preferably at least one selected from the group consisting of nylon 6, nylon 66, nylon 6/66, and nylon 6/66/12, and more preferably nylon 6/66 and/or nylon 6/66/12.

The polyamide copolymer may be a block copolymer in which a certain amount of amide of the same repeating unit is followed by a certain amount of amide of a different type, or may be a random copolymer in which different types of amides repeat randomly, and a random copolymer is preferable. If the polyamide copolymer is a random copolymer, the expanded beads can be molded at a lower molding pressure in in-mold molding.

The polyamide-based resin can be an end-capped polyamide-based resin in which a functional group at a molecular chain end is blocked. This can more reliably suppress hydrolysis during the production process of expanded beads, making it easier to provide expanded beads that can withstand in-mold molding.

An end-capping agent can be used to block the molecular chain ends. As the end-capping agent, for example, a carbodiimide compound, an oxazoline compound, an isocyanate compound, or an epoxy compound is used, and among these, the carbodiimide compound is preferable. Specific examples thereof include aromatic monocarbodiimides such as bis(dipropylphenyl)carbodiimide (for example, "Stabaxol 1-LF" manufactured by Rhein Chemie Corporation), aromatic polycarbodiimides (for example, "Stabaxol P", "Stabaxol P100", and "Stabaxol P400" manufactured by Rhein Chemie Corporation), and aliphatic polycarbodiimides such as poly(4,4'-dicyclohexylmethanecarbodiimide) (for example, "Carbodilite LA-1" manufactured by Nisshinbo Chemical Inc.). These end-capping agents may be used singly or in combination of two or more.

The blending amount of the end-capping agent is preferably 0.1 to 5 parts by mass, and more preferably 0.5 to 3 parts by mass, with respect to 100 parts by mass of the polyamide resin.

### • Other thermoplastic resins

In the melt-kneading step, other thermoplastic resins may be added in addition to the polyamide-based resin as the base resin within a range that does not impair the object and effect of the present invention. Examples of other thermoplastic resins include polyethylene-based resin, polypropylene-based resin, polystyrene-based resin, vinyl acetate resin, thermoplastic polyester resin, acrylic ester resin, methacrylic ester resin, modified polyphenylene ether resin, polycarbonate resin, polyacetal resin, polybutylene terephthalate resin, polysulfone resin, polyether sulfone resin, polyamideimide resin, polyetherimide resin, polyetheretherketone resin, and polyarylene sulfide-based resin.

### • Organic compound-based additive (A) and iodide-based additive (X)

In the melt-kneading step, the hindered phenol-based compound (A1) and/or the organophosphorus-based compound (A2) is used as the organic compound-based additive (A). The organic compound-based additive (A) is used, for example, as an antioxidant for expanded beads. In addition, in the melt-kneading step, copper iodide, or copper iodide and potassium iodide are used as the iodide-based additive (X). The iodide-based additive (X) is used, for example, as a heat resistant agent for expanded beads having a polyamide-based resin as a base resin.

Conventional expanded beads having a polyamide-based resin as a base resin may be insufficient in the secondary expandability of the expanded beads, and poor in the surface properties of the molded article. Particularly in the corner portions of the molded article, the polyamide-based resin expanded beads molded article may be poor in secondary expandability and poor in surface properties. In the present disclosure, it has been found that using the organic compound-based additive (A) and the iodide-based additive (X) improves the heat resistance of the polyamide-based resin expanded beads molded article, and improves the secondary expandability. As a result, a polyamide-based resin expanded beads molded article having good surface properties and excellent moldability is obtained. In addition, the molding pressure conditions tend to be particularly wide on the low pressure side, allowing molding at low pressure and molding with a small amount of heating medium, and thus it has been found that the amount of the heating medium required during molding can be reduced. Further, it has been found that the synergistic effect of the organic compound-based additive (A) and the iodide-based additive (X) allows expansion at a high magnification and improves the lightweight property of the molded article.

The reason why moldability is improved by the combined use of the organic compound-based additive (A) and the iodide-based additive (X) is considered to be as follows. The step of melt-kneading the base resin, the organic compound-based additive (A), and the iodide-based additive (X) to provide the polyamide-based resin melt is performed by, for example, feeding the base resin, the organic compound-based additive (A), and the iodide-based additive (X) to an extruder, and melt-kneading them in the extruder. At this time, generally, the resin melt is obtained by performing melt-kneading near the melting point of the base resin so as to sufficiently met-knead the base resin, the organic compound-based additive (A), and the iodide-based additive (X). It is considered that in performing the melt-kneading, the presence of the organic compound-based additive (A) and the iodide-based additive (X) suppresses the molecular chain scission of the polyamide-based resin to allow the original expandability of the polyamide-based resin to be maintained, thereby improving secondary expandability during molding to provide polyamide-based resin expanded beads with a wide moldable pressure range and excellent moldability. In addition, the molecular chain scission of the polyamide resin is suppressed to allow expanded beads with an excellent lightweight property to be obtained, and secondary expandability during molding is improved to allow an expanded beads molded article having an excellent lightweight property to be obtained. For the effect of improving moldability, even in the corner portions of a molded article, the portions being difficult to mold, a polyamide-based resin expanded beads molded article with excellent secondary expandability and excellent surface properties can be obtained. In in-mold molding, the excellent secondary expandability of the corner portions of the molded article means that a molded article with excellent moldability can be obtained even in the case of a thick molded article or a molded article with a complicated shape such as a shape having a thick portion and a thin portion.

In addition, the step of expanding polyamide-based resin particles with a blowing agent to provide polyamide-based resin expanded beads is performed by, for example, a dispersion step of dispersing the resin particles in a liquid such as water in a sealed container to provide a dispersion, an impregnation step of impregnating the resin particles in the dispersion with a blowing agent, and an expansion step (in other words, an opening step) of releasing the resin particles containing the blowing agent together with water from the sealed container to a pressure lower than the pressure in the sealed container to perform expansion. In particular, when the resin particles are dispersed in water, the polyamide-based resin particles are plasticized and easily hydrolyzed. In the production method including the dispersion step, the impregnation step, and the expansion step, it has been considered that the presence of the organic compound-based additive (A) and the iodide-based additive (X) further suppresses the molecular chain scission of the polyamide-based resin, thereby improving the secondary expandability during molding, and making it easy to provide polyamide-based resin expanded beads having excellent moldability.

The addition amount of the organic compound-based additive (A) is 0.05 parts by mass or more and 5 parts by mass or less with respect to 100 parts by mass of the base resin. When the addition amount of the organic compound-based additive (A) is less than 0.05 parts by mass, the moldability improving effect and the lightweight property improving effect may be insufficient. On the other hand, when the addition amount is more than 5 parts by mass, the moldability may be deteriorated. From the same viewpoint, the addition amount of the organic compound-based additive (A) with respect to 100 parts by mass of the base resin is preferably 0.1 parts by mass or more and 3 parts by mass or less, and more preferably 0.1 parts by mass or more and 1.5 parts by mass or less. From the viewpoint of lowering the shrinkage rate of the molded article while maintaining a wider moldable pressure range, it is more preferable that the addition amount of the organic compound-based additive (A) is 0.3 parts by mass or more and 1 part by mass or less with respect to 100 parts by mass of the base resin. The addition amount of the organic compound-based additive (A) is the sum of the addition amount of the hindered phenol-based compound (A1) and the addition amount of the organophosphorus-based compound (A2), and includes a case where either one of the addition amounts is 0.

The organic compound-based additive (A) preferably contains both the hindered phenol-based compound (A1) and the organophosphorus-based compound (A2). In addition, more preferably, the organic compound-based additive (A) contains the hindered phenol-based compound (A1) and the organophosphorus-based compound (A2), and the ratio of the addition amount of the organophosphorus-based compound (A2) with respect to the addition amount of the hindered phenol-based compound (A1) is 0.5 or more and 2 or less. If the ratio of the addition amount of the organophosphorus-based compound (A2) with respect to the amount of the hindered phenol-based compound (A1) satisfies the specific range, the hydrolysis of the polyamide-based resin can be further prevented by the synergistic effect of the organic compound-based additive (A) and the iodide-based additive (X), and expanded beads having a more excellent lightweight property can be obtained. From the viewpoint of further improving this effect, when the organic compound-based additive (A) contains the hindered phenol-based compound (A1) and the organophosphorus-based compound (A2), the ratio of the addition amount of the organophosphorus-based compound (A2) with respect to the amount of the hindered phenol-based compound (A1) is more preferably 0.7 or more and 1.5 or less, and still more preferably 0.8 or more and 1.3 or less.

The hindered phenol-based compound (A1) preferably has 2 to 6 hindered phenol structures, and more preferably has 2 hindered phenol structures. In addition, the hindered phenol-based compound preferably has an amide bond, and a hindered type hindered phenol-based compound having an amide bond is more preferable. When a hindered phenol -based compound is a hindered type hindered phenol-based compound having an amide bond, the hindered phenol-based compound preferably has 2 to 6 amide bonds and 2 to 6 hindered type hindered phenol structures, and more preferably has 2 to 6 di-tert-butyl-4-hydroxyphenylalkylcarbonylamide groups, and the number of carbon atoms of the alkyl chain moiety in the di-tert-butyl-4- hydroxyphenylalkylcarbonylamide group is preferably 1 to 5 and more preferably 2 to 4. The hindered phenol-based compound is particularly preferably N,N'-hexane-1,6-diyl bis[3-(3,5-di-tert-butyl-4-hydroxyphenylpropionamide], which is a compound represented by the following general formula (1).

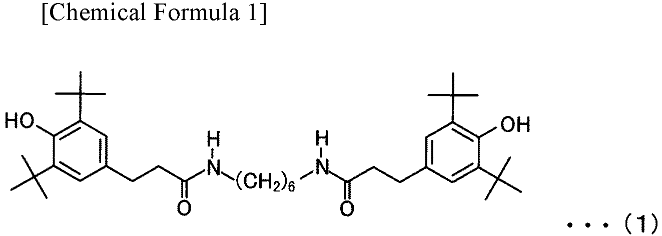

As the organophosphorus-based compound (A2), for example, phosphite triester can be used, and examples thereof include tris(isodecyl)phosphite, tris(tridecyl)phosphite, phenylisooctylphosphite, phenylisodecylphosphite, phenyldi(tridecyl)phosphite, diphenylisooctylphosphite, diphenylisodecylphosphite, diphenyltridecylphosphite, triphenylphosphite, tris(nonylphenyl)phosphite, 4,4'-isopropylidene diphenol alkyl phosphite, tris nonylphenyl phosphite, tris dinonylphenyl phosphite, tris(2,4-di-t-butylphenyl)phosphite, tris(biphenyl)phosphite, distearyl pentaerythritol diphosphite, di(2,4-di-t-butylphenyl)pentaerythritol diphosphite, di(nonylphenyl)pentaerythritol diphosphite, phenylbisphenol A pentaerythritol diphosphite, tetratridecyl 4,4'-butylidenebis(3-methyl-6-t-butylphenol)diphosphite, hexatridecyl 1,1,3-tris(2-methyl-4-hydroxy-5-t-butylphenyl) butane triphosphite, 3,5-di-t-butyl-4-hydroxybenzylphosphite diethyl ester, sodium bis(4-t-butylphenyl)phosphite, sodium-2,2-methylene-bis(4,6-di-t-butyl)phenyl)-phosphite, 1,3-bis(diphenoxyphosphonyloxy)-benzene, and ethylbis(2,4-di-tert-butyl-6-methylphenyl)phosphite. In addition, an oligomer-type or polymer-type compound having a phosphite structure can be used. The organophosphorus-based compound is preferably tris(2,4-di-t-butylphenyl)phosphite represented by the following general formula (2).

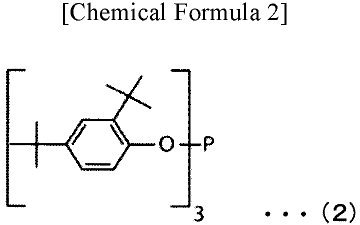

The organic compound-based additive (A) made of the hindered phenol-based compound (A1) and/or the organophosphorus-based compound (A2) is used, for example, as an antioxidant for expanded beads. Antioxidants other than the hindered phenol-based compound (A1) and the organophosphorus-based compound (A2) may be added to the base resin within a range that does not impair the object and effect of the present invention. As other antioxidants, sulfur antioxidants, thioether-based antioxidants, and the like can be used.

The ratio of the addition amount of the organic compound-based additive (A) with respect to the amount of the iodide-based additive (X) (that is, the ratio of the total addition amount of the hindered phenol-based compound (A1) and the organophosphorus-based compound (A2) with respect to the total addition amount of copper iodide and potassium iodide) is 0.3 or more and 7 or less. If the ratio of the addition amounts is less than 0.3, the moldability may become insufficient. On the other hand, if the ratio of the addition amounts is more than 7, the moldability of the expanded beads becomes insufficient, and the heat resistance of the molded article becomes insufficient, which may lead to increased shrinkage in high temperature environments. From the same point of view, the ratio of the addition amount of the organic compound-based additive (A) with respect to the amount of iodide-based additive (X) is preferably 0.5 or more and 5 or less, more preferably 1 or more and 4 or less, and still more preferably 1.5 or more and 3 or less. The addition amount of the iodide-based additive (X) is the total of the addition amount of copper iodide and the addition amount of potassium iodide, and includes the case where the addition amount of either one is 0.

As described above, the iodide-based additive (X) is made of copper iodide, or copper iodide and potassium iodide. That is, as the iodide-based additive (X), at least copper iodide is used, and potassium iodide can also be used together with copper iodide.

The addition amount of the iodide-based additive (X) is preferably 0.01 part by mass or more and 1 part by mass or less with respect to 100 parts by mass of the base resin. In this case, a molded article with even better heat resistance can be obtained. From the same point of view, the addition amount of the iodide-based additive (X) with respect to 100 parts by mass of the base resin is more preferably 0.02 parts by mass or more and 0.5 parts by mass or less, and still more preferably 0.03 parts by mass or more and 0.2 parts by mass or less.

From the viewpoint of improving flame retardancy and further improving the above-described effects by using combination of the iodide-based additive (X) and the organic compound-based additive (A), the iodide-based additive (X) is preferably made of copper iodide and potassium iodide. The ratio of the addition amount of potassium iodide with respect to the amount of copper iodide is preferably 0.5 or more and 20 or less. In this case, even if the addition amount of the iodide-based additive (X) is small, a molded article with better heat resistance can be obtained. From the same viewpoint, the ratio of the addition amount of potassium iodide with respect to the addition amount of copper iodide is more preferably 1 or more and 10 or less, and still more preferably 2 or more and 6 or less.

As described above, the iodide-based additive (X) can function as a flame retardant, but in the melt-kneading step, a flame retardant made of a metal halide other than the iodide-based additive (X) may be added within a range that does not impair the object and effect of the present invention. In this case, the addition amount of the iodide-based additive (X) in the metal halide is preferably 70% by mass or more, more preferably 80% by mass or more, and still more preferably 90% by mass or more, and it is particularly preferred that the metal halide be made essentially of the iodide-based additive (X).

Examples of the metal halides other than the iodide-based additive (X) include: alkali metal halides such as lithium iodide, sodium iodide, lithium bromide, sodium bromide, potassium bromide, lithium chloride, sodium chloride, and potassium chloride; alkaline earth metal halides such as magnesium iodide, calcium iodide, magnesium bromide, calcium bromide, magnesium chloride, and calcium chloride; group 7 metal halides such as manganese(II) iodide, manganese(II) bromide, and manganese(II) chloride; group 8 metal halides such as iron(II) iodide, iron(II) bromide, and iron(II) chloride; group 9 metal halides such as cobalt(II) iodide, cobalt(II) bromide, and cobalt(II) chloride; group 10 metal halides such as nickel(II) iodide, nickel(II) bromide, and nickel(II) chloride; group 11 metal halides such as copper(I) bromide and copper(I) chloride; group 12 metal halides such as zinc iodide, zinc bromide, and zinc chloride; group 13 metal halides such as aluminum(III) iodide, aluminum(III) bromide, and aluminum(III) chloride; group 14 metal halides such as tin(II) iodide, tin(II) bromide, and tin(II) chloride; and group 15 metal halides such as antimony triiodide, antimony tribromide, antimony trichloride, bismuth(III) iodide, bismuth(III) bromide, and bismuth(III) chloride. As other metal halides, one type of these can be used, or two or more types can be used in combination.

From the viewpoints of further improving moldability, lowering costs, and lowering the negative impact on the environment and living organisms, the metal constituting the metal halide is preferably copper or zinc. In addition, from the viewpoint of further improving heat resistance, the halogen constituting the metal halide is preferably iodine.

The addition amount of the metal halide (specifically, the total addition amount of the iodide-based additive (X) and metal halides other than the iodide-based additive (X)) is preferably 0.05 parts by mass or more and 1 part by mass or less with respect to 100 parts by mass of the base resin. In this case, a molded article with even better heat resistance can be obtained. From the same viewpoint, the addition amount of the metal halide with respect to 100 parts by mass of the base resin is more preferably 0.07 parts by mass or more and 0.8 parts by mass or less, and still more preferably 0.1 parts by mass or more and 0.6 parts by mass or less. The addition amount of the metal halide means the total addition amount of metal halides including the iodide additive (X).

In the melt-kneading step, there can be added as appropriate if necessary various additives such as cell nucleating agents, antistatic agents, conductivity imparting agents, lubricants, ultraviolet absorbers, flame retardants, metal deactivators, crystal nucleating agents, colorants, and fillers. The addition amount of these various additives varies depending on the intended use of the molded article, but is preferably 25 parts by mass or less with respect to 100 parts by mass of the base resin. The above addition amount is more preferably 15 parts by mass or less, still more preferably 10 parts by mass or less, and still even more preferably 5 parts by mass or less.

In the melt-kneading step, carbon black can be further added, and the polyamide-based resin melt can contain carbon black. The polyamide-based resin melt contains carbon black, and the addition amount of carbon black is preferably 0.5 parts by mass or more and 10 parts by mass or less with respect to 100 parts by mass of the base resin. In this case, it is possible to produce black expanded beads and molded article with little discoloration over time even in a high temperature environment. Therefore, the expanded beads and the molded article are suitable for vehicle members (specifically, interior members, exterior members), and the like. From the same viewpoint, the addition amount of carbon black with respect to 100 parts by mass of the base resin is more preferably 0.7 parts by mass or more and 7 parts by mass or less, and even more preferably 1.5 parts by mass or more and 5 parts by mass or less. Typically, adding carbon black reduces moldability, but in the production method of the present disclosure, the organic compound-based additive (A) and the iodide-based additive (X) are used in the specific amount and the specific ratio, and thus excellent moldability can be maintained even when carbon black is added.

Melt kneading is performed, for example, in an extruder. The resin temperature is, for example, 250 to 300°C. The resin temperature is a resin temperature at the head portion at the tip of the extruder.

### Granulation step

In the granulation step, the polyamide-based resin melt is granulated. Thereby, polyamide-based resin particles are obtained. Granulation is performed, for example, as follows. First, a polyamide-based resin melt is extruded from an extruder into a strand, and the extruded strand is cooled and solidified. The solidified strand is then cut. Thus, the polyamide-based resin melt is granulated to allow providing resin particles.

### Expansion step

As described above, the expansion step is performed, for example, by the dispersion step, the impregnation step, and the opening step, and
in the expansion step, resin particles are expanded by using a blowing agent to provide expanded beads. Specifically, resin particles are impregnated with a blowing agent, and
the resin particles containing the blowing agent are expanded by heating, changing pressure, changing volume, or the like.

As the blowing agent, an organic physical blowing agent or an inorganic physical blowing agent can be used. Examples of the organic physical blowing agents include: aliphatic hydrocarbons such as propane, butane, pentane, hexane, and heptane; alicyclic hydrocarbons such as cyclopentane and cyclohexane; halogenated hydrocarbons such as chlorofluoromethane, trifluoromethane, 1,1-difluoroethane, 1,1,1,2-tetrafluoroethane, methyl chloride, ethyl chloride, and methylene chloride; and dialkyl ethers such as dimethyl ether, diethyl ether, and methyl ethyl ether. Examples of the inorganic physical blowing agent include carbon dioxide, nitrogen, helium, argon, and air.

Among physical blowing agents, from the viewpoint of having a low impact on the environment, being non-flammable, and having excellent safety, inorganic physical blowing agents are preferable, carbon dioxide or nitrogen is more preferable, and carbon dioxide is still more preferable.

The expansion step is not particularly limited as long as the resin particles are impregnated with a blowing agent and the resin particles are expanded, and for example, is performed by the following method [1] or [2].
[1] A method of impregnating resin particles with a blowing agent, then taking out the resin particles impregnated with the blowing agent without expansion, and then heating in a blowing device to provide expanded beads.
[2] A method of impregnating resin particles dispersed in a dispersion medium (specifically, a liquid) in a closed device with a blowing agent, raising the temperature to around the softening temperature of the resin, and then releasing the resin particles together with the dispersion medium to the outside of the device under low pressure to provide expanded beads.

The expansion step is preferably performed by the method [2] above.

The method [2] will be explained in more detail below.

The expansion step is preferably performed by the following dispersion step, impregnation step, holding step, and release step.
(1) In the dispersion step, resin particles are dispersed in water in a closed container to provide a dispersion.
(2) In the impregnation step, the resin particles in the dispersion are impregnated with a physical blowing agent.
(3) In the holding step, the dispersion is held at equal to or higher than a temperature 90°C lower than the melting point (Tm) of the resin particles (Tm - 90°C) and lower than a temperature 50°C lower than the melting point (Tm) (Tm - 50°C) for a holding time of 1 minute or longer and 60 minutes or shorter.
(4) In the release step, the temperature (Te) of the dispersion immediately before expanding is set to be at equal to or higher than a temperature 90°C lower than the melting point (Tm) of the resin particles (Tm - 90°C) and lower than a temperature 50°C lower than the melting point (Tm) (Tm-50°C), and the resin particles containing the blowing agent are discharged together with water from the inside of the closed container to a pressure lower than the pressure inside the closed container to cause expanding.

The expansion step may include steps other than the dispersion step, impregnation step, holding step, and release step, and other components may be added in any of the steps. The impregnation step and the holding step may be performed simultaneously, and the holding step may be performed before or after the impregnation step.

### Dispersion step

The dispersion step is a step in which resin particles are dispersed in water in a closed container to provide a dispersion. The method for dispersing resin particles in water is not particularly limited, and any known method can be used. For example, a dispersion can be obtained by adding resin particles to water while stirring the water using a stirrer, and further stirring the mixture. In addition, if necessary, to the dispersion, there are preferably added dispersants such as inorganic substances including aluminum oxide, tricalcium phosphate, magnesium pyrophosphate, zinc oxide, kaolin, mica, talc, and smectite; and dispersion aids such as anionic surfactants including sodium dodecylbenzenesulfonate and sodium alkanesulfonate. The mass ratio of resin particles to the dispersant (resin particles/dispersant) is preferably 20 to 2000, and more preferably 30 to 1000. In addition, the mass ratio of the dispersant to the dispersion aid (dispersant/dispersion aid) is preferably 1 to 500, and more preferably 1 to 100.

### Impregnation step

The impregnation step is a step of impregnating the resin particles in the dispersion with a blowing agent. In addition, the resin particles are allowed to absorb water at the same time. The method of impregnating the resin particles with the blowing agent is not particularly limited, but it is preferable to disperse the resin particles in water in a pressurizable sealed container such as an autoclave and impregnate the resin particles with the blowing agent. From the viewpoint of sufficiently impregnating the resin particles with the blowing agent in a short time, it is preferable to impregnate the resin particles with the blowing agent by heating in addition to pressurization.

The impregnation step includes the step of changing the pressure inside the sealed container from atmospheric pressure to reach the pressure at the time of impregnation (hereinafter also referred to as impregnation pressure) when pressurization is performed.

In addition, the step of impregnating with the blowing agent includes a step of heating a dispersion in which resin particles are dispersed in water from room temperature to the temperature at the time of impregnation (hereinafter also referred to as the impregnation temperature).

When the impregnation step is performed under heating, from the viewpoint of sufficiently impregnating the resin particles with the blowing agent in a short time, the impregnation temperature is preferably 50°C or higher, more preferably 80°C or higher, preferably equal to or lower than the melting point (Tm (°C)) of the resin particles, and more preferably equal to or lower than (Tm - 20 (°C)).

In addition, for the pressure during impregnation performed under pressure (hereinafter also referred to as impregnation pressure), from the viewpoint of sufficiently impregnating the resin particles with the blowing agent in a short time, the blowing agent is added to the container containing the dispersion to set the pressure inside the closed container to preferably 1.5 MPa (G) or higher and 7 MPa (G) or lower, more preferably 2.5 MPa (G) or higher and 5 MPa (G) or lower. "(G)" means gauge pressure; for example, "1.5 MPa (G)" means 1.5 MPa in gauge pressure.

The dispersion step and the impregnation step also have the role of allowing the resin particles to absorb water. From the viewpoint of allowing the resin articles to sufficiently absorb water to plasticize the resin particles, the total time of the step of obtaining a dispersion and the step of impregnating with a blowing agent is preferably 20 minutes or longer and 60 minutes or shorter, and more preferably 30 minutes or longer and 60 minutes or shorter. In addition, the temperature increase rate in the impregnation step is preferably 1°C/min or more and 10°C/min or less, and more preferably 2°C/min or more and 7°C/min or less, from the viewpoint of allowing the resin particles to sufficiently absorb water to plasticize the resin particles and productivity of expanded beads.

### Holding step

The holding step is a step of holding a dispersion at equal to or higher than a temperature 90°C lower than the melting point (Tm) of the resin particles (Tm - 90°C) and equal to or lower than a temperature 50°C lower than the melting point (Tm) of the resin particles (Tm - 50°C) at a holding time of 1 minute or longer and 60 minutes or shorter. From the viewpoint of allowing the resin particle to sufficiently absorb water to plasticize the polyamide resin, and from the viewpoint of uniformly impregnating the resin particles with the blowing agent, the holding temperature of the dispersion in the holding step is equal to or higher than a temperature 90°C lower than the melting point (Tm) of the resin particles (Tm - 90°C) and lower than a temperature 50°C lower (Tm - 50°C), preferably equal to or higher than a temperature 80°C lower (Tm - 80°C) and equal to or lower than a temperature 55°C lower (Tm - 55°C), more preferably equal to or higher than a temperature 70°C lower (Tm - 70°C) and equal to or lower than a temperature 57°C lower (Tm - 57°C), and still more preferably equal to or higher than a temperature 65°C lower (Tm - 65°C) and equal to or lower than a temperature 59°C lower (Tm - 59°C).

Typically, when producing expanded beads containing a general-purpose resin such as a polypropylene-based resin as a base resin, holding is performed near the melting point of the raw material resin. However, in the method for producing expanded beads containing polyamide-based resin as the base resin, the holding is preferably performed at equal to or higher than a temperature 90°C lower than the melting point (Tm) of the resin particles (Tm - 90°C) and lower than a temperature 50°C lower (Tm- 50°C). This is considered because the polyamide-based resin has water absorption properties, the water used as a dispersion plasticizes the resin particles, and the melting point is significantly lowered, whereby it is possible to produce expanded beads at a temperature significantly lower than the melting point of the resin particles.

From the viewpoint of uniformly impregnating resin particles with a blowing agent and providing expanded beads with a high closed cell content and productivity of expanded beads and prevention of hydrolysis of the polyamide-based resin, the holding time in the holding step is preferably 1 minute or longer and 60 minutes or shorter, more preferably 5 minutes or longer and 40 minutes or shorter, still more preferably 10 minutes or longer and 30 minutes or shorter, and still even more preferably 13 minutes or more and 20 minutes or shorter.. Holding for the above-described time can provide polyamide-based resin expanded beads having a low apparent density and a high closed cell content. The holding step can be set in multiple stages within the temperature range, or the temperature can be slowly raised within the temperature range over a sufficient period of time. From the viewpoint of easy production, it is preferable to set one stage (holding temperature is constant) within the above temperature range and hold for the above period of time.

From the viewpoint of uniformly impregnating the resin particles with a blowing agent, the holding step is preferably performed under pressure, and it is preferable to maintain the same pressure as the impregnation pressure. The pressure inside the container containing the dispersion is preferably 1.5 MPa (G) or higher and 7 MPa (G) or lower, and more preferably 2.5 MPa (G) or higher and 5 MPa (G) or lower.

### Release step

The release step is a step of expanding resin particles impregnated with a blowing agent, and is performed by releasing resin particles impregnated with a blowing agent together with water into an atmosphere at a pressure lower than the pressure in the holding step (typically under atmospheric pressure) and causing expanding. The release step is performed, for example, after the holding step.

From the viewpoint of obtaining expanded beads with a low apparent density and a high closed cell content, the temperature Te of the dispersion immediately before expanding (hereinafter also referred to as expanding temperature) is preferably equal to or higher than a temperature 90°C lower than the melting point (Tm) of the resin particles (Tm - 90°C) and lower than a temperature 50°C lower than the melting point (Tm) of the resin particles (Tm - 50°C), more preferably equal to or higher than a temperature 80°C lower (Tm - 80°C) and equal to or lower than a temperature 55°C lower (Tm - 55°C), still more preferably equal to or higher than a temperature 70°C lower (Tm - 70°C) and equal to or lower than a temperature 57°C lower (Tm - 57°C), and still even more preferably equal to or higher than a temperature 65°C lower (Tm - 65°C) and equal to or lower than a temperature 59°C lower (Tm - 59°C).

A blowing pressure, which is a pressure immediately before release in the release step, is preferably 0.5 MPa (G) or higher and 10 MPa (G) or lower, more preferably 1.5 MPa (G) or higher and 7 MPa (G) or lower, and still more preferably 2.5 MPa (G) or higher and 5 MPa (G) or lower.

### Expanded beads

### Apparent density

The apparent density of the expanded beads is preferably 50 to 200 kg/m³. In this case, the expanded beads and the molded article can fully exhibit the mechanical properties of the polyamide-based resin while having an excellent lightweight property. From the viewpoint of further improving this effect, the apparent density of the expanded beads is more preferably from 55 to 150 kg/m³, and still more preferably from 60 to 130 kg/m³. The apparent density is measured as follows. First, the mass W1 of approximately 500 cm³ of expanded beads left for 2 days under the conditions of 50% relative humidity, 23°C, and 1 atm is measured. Then, a graduated cylinder containing water at a temperature of 23°C is prepared, and the expanded beads, the mass of which has been measured, are submerged by using a wire mesh in this graduated cylinder. Considering the volume of the wire mesh, the volume of expanded beads V1 [unit: cm³], which can be read from the rise in water level, is measured, the mass W1 [g] of the expanded beads is divided by the volume V1 (W1/V1), and the unit is converted to [kg/m³] to determine the apparent density of the expanded beads.

### Method for producing molded article

A molded article is obtained by in-mold molding the expanded beads. The molded article is made of expanded beads that are fused together.

Conventionally known methods can be used for the in-mold molding method, but it is preferable to use steam heating. The steam causes the polyamide-based resin in the expanded beads to absorb water and become plasticized, making it possible to lower the molding pressure. When the obtained molded article is dried to remove water, the physical properties inherent to the polyamide-based resin are restored, and the molded article becomes a molded article having high heat resistance.

The in-mold molding is performed, for example, as follows. First, expanded beads are filled in a mold Then, steam is supplied into the mold, and the expanded beads are heated and fused. After completion of the heating, the pressure is released, and the molded article is cooled with water until the surface pressure by the expansion force of the molded article decreases to a predetermined pressure (for example, 0.02 to 0.04 MPa (gauge pressure)), and then the mold is opened to take out the molded article from the mold.

### Molded article

### Thickness

The polyamide-based resin expanded beads obtained by the production method of the present disclosure are excellent in moldability, and thus are suitable for molding a thick (that is, having large thickness) molded article. Specifically, the thickness of the expanded beads molded article is preferably 30 mm or more, and more preferably 35 mm or more.

### Density

From the viewpoint of further sufficiently improving the lightweight property, the density of the molded article is preferably 40 to 200 kg/m³, more preferably 45 to 150 kg/m³, and still more preferably 50 to 120 kg/m³. The density of the molded article is determined by dividing the mass of the molded article by the outer dimension and converting the unit into [kg/m³].

### Fusion-bonding rate

From the viewpoint of further improving the appearance and the mechanical properties of the molded article, the fusion-bonding rate of the molded article is preferably 80% or more, more preferably 90% or more. A method for measuring the fusion-bonding rate will be described later.

### Shrinkage rate after heating

From the viewpoint of more sufficiently preventing shrinkage in a high-temperature environment, the shrinkage rate after heating at a temperature of 160°C for 20 days is preferably 3% or less, more preferably 1% or less, and still more preferably 0.4% or less. The shrinkage rate of the molded article after heating can be adjusted to the above range by using combination of the iodide-based additive (X) and the organic compound-based additive (A) as described above. A method for measuring the shrinkage rate will be described later.

### EXAMPLES

Then, the present invention will be described in more detail with reference to Examples, but the present invention is not limited to these Examples, and various modifications can be made without departing from the gist of the present invention.

### Example 1

### Production of resin particles

100 parts by mass of a polyamide-based resin, 0.2 parts by mass of a hindered phenol-based compound, 0.2 parts by mass of an organophosphorus-based compound, 0.05 parts by mass of copper iodide, 0.2 parts by mass of potassium iodide, and 0.3 parts by mass of a cell nucleating agent (specifically, talc) were supplied to an extruder, and melt-kneaded to provide a melt-kneaded product. "UBE Nylon 6434B" manufactured by Ube Industries, Ltd. was used as the polyamide-based resin, N,N'-hexane-1,6-diylbis[3-(3,5-di-tert-butyl-4-hydroxyphenylpropionamide] ("Irganox 1098" manufactured by BASF Japan Ltd.) was used as the hindered phenol-based compound, tris(2,4-di-t-butylphenyl)phosphite ("Irgafos 168" manufactured by BASF Japan Ltd.) was used as the organophosphorus-based compound, and talc ("Talcan powder KHP-125B" manufactured by HAYASHI KASEI CO., LTD.) was used as the cell nucleating agent.

The melt-kneaded product was extruded as a strand having a circular cross section from pores of a spinneret attached to a tip of the extruder, the extruded strand was cooled with water, then cut with a pelletizer so that an average mass per particle was 2 mg, and dried to provide pellet-shaped resin particles. The melting point of the resin particles was 186°C.

The polyamide-based resin "6434B" was a polyamide 6/66/12 copolymer (nylon 6/66/12), having melting point (Tm): 188°C, density: 1.14 g/cm³, flexural modulus: 1070 MPa, and product name: UBE nylon 6434B.

### Production of expanded beads

In a 5 liter autoclave equipped with a stirrer, 500 g of resin particles and 3.5 liters of water as a dispersion medium were charged, and 0.3 parts by mass of kaolin as a dispersant and 0.004 parts by mass of sodium alkylbenzene sulfonate as a surfactant were further added to 100 parts by mass of the resin particles. While the contents in the autoclave were heated from room temperature (specifically, 23°C) to an impregnation temperature (131.5°C) with stirring, carbon dioxide as a blowing agent was press-fitted into the autoclave until the pressure in the autoclave reached an impregnation pressure (4.0 MPa (G)). At this time, the heating time from room temperature (23°C) to the impregnation temperature (131.5°C) was 40 minutes. Then, holding was performed at 131°C and 4.0 MPa (G) for 15 minutes.

Thereafter, the resin particles impregnated with the blowing agent were released together with the dispersion medium into an atmosphere of atmospheric pressure (0.1 MPa) to expand the resin particles, thereby providing expanded beads. The expanding temperature (temperature of the dispersion immediately before expanding) was 131.5°C. Then, the expanded beads were subjected to aging in an oven at 60°C for 24 hours, and then slowly cooled to 23°C. The expanded beads thus obtained were used for evaluation described later and production of a molded article.

### Production of molded article

Then, a molded article was prepared using expanded beads. Specifically, a mold was clamped, the resulting expanded beads were filled in the flat plate mold having a length of 200 mm × a width of 65 mm × a thickness of 40 mm, and subjected to in-mold molding by steam heating to provide a plate-shaped expanded molded article.

In the heating method, steam was supplied for 5 seconds to perform preheating (exhaust step) in a state where the drain valves of the mold on both sides were opened, then steam was supplied from the movable-side mold in a state where the drain valve on the fixed side was opened, and then steam was supplied from the fixed-side mold in a state where the drain valve on the movable side was opened, then the exhaust valve was closed, and heating was performed to a molding heating steam pressure of 0.12 MPa (molding pressure = molding steam pressure). After completion of the heating, the pressure was released, and the molded article was cooled with water until the surface pressure by the expansion force of the molded article decreased to 0.02 MPa (gauge pressure), then the mold was opened, and the molded article was taken out from the mold. Thereafter, the molded article was obtained by being placed in an oven at 80°C and taken out after 24 hours.

### Evaluation of expanded beads

The expanded beads were evaluated as follows. The results are shown in the table.

### Apparent density

First, the mass W1 of approximately 500 cm³ of expanded beads left for 2 days under the conditions of 50% relative humidity, 23°C, and 1 atm was measured. Then, a graduated cylinder containing water at a temperature of 23 °C was prepared, and the expanded beads, the mass of which had been measured, were submerged by using a wire mesh in this graduated cylinder. Considering the volume of the wire mesh, the volume of expanded beads V1 [unit: cm³], which can be read from the rise in water level, was measured, the mass W1 [g] of the expanded beads was divided by the volume V1 (W1/V1), and the unit was converted to [kg/m³] to determine the apparent density of the expanded beads.

### Evaluation of moldability

The moldability was evaluated by performing in-mold molding of expanded beads while changing the molding pressure, and evaluating the moldable range. First, the molding pressure was changed by 0.02 MPa between 0.10 to 0.18 [MPa (G): gauge pressure)], and in-mold molding was performed at a total of 4 points of molding pressures. Then, evaluations of fusion bondability, recoverability, and surface properties (at a central portion and corner portion(s) of a molded article) were performed on each molded article produced at the respective molding pressures. In the evaluations, the cases where a molded article passing all the abovementioned evaluation items could be produced (molded) at two or more pressures among the four molding pressures ranked as "A", the cases where a molded article passing through all the abovementioned evaluation items could be produced (molded) at one pressure among the four molded pressures ranked "B", and the cases where a molded article passing through all the abovementioned evaluation items could not be produced (molded) at any pressure among the four molded pressures ranked "C".

### Fusion bondability

In order to evaluate the fusion bondability of the molded article, the fusion-bonding rate was measured, and the case where the fusion-bonding rate was 80% or more was evaluated as "A (passed)", the case where the fusion-bonding rate was 40% or more and less than 80% was evaluated as "B (failed)", and the case where the fusion-bonding rate was less than 40% was evaluated as "C (failed)".

The fusion-bonding rate of the molded article was measured by the following method. A flat plate-shaped molded article was used as a test piece, and a cut having a depth of about 10 mm was made in the thickness direction at a position bisecting the longitudinal length of the molded article with a cutter knife on one of main surfaces (that is, the surface having the largest area) of the molded article, and the molded article was bent from the cut portion to be broken. The ratio of the number m of expanded beads with material fracture existing on the fracture surface to the number n of all expanded beads existing on the fracture surface (m/n × 100 [%]), that is, the material fracture rate was calculated. When the molded article could not be broken even when being bent, the fusion-bonding rate was set to 100%. The measurement was performed five times using different test pieces, the respective material fracture rates were obtained, and the arithmetic average thereof was taken as the fusion-bonding rate.

### Recoverability

The molded article was placed in an environment at a temperature of 23°C and a relative humidity of 50% for 24 hours, and then the thicknesses of the central portion of the main surface (that is, the surface having the largest area) of the flat plate-shaped molded article and four corner portions of the main surface were measured. A case where the ratio of the thickness of the central portion to the thickness of the thickest one of the four corner portions was 90% or more was evaluated as "A (passed)", and a case where the ratio was less than 90% was evaluated as "C (failed)".

### Surface property

### -Central portion

The central portion (specifically, a central portion of each surface of the molded article) of the surface of the flat plate-shaped molded article was visually confirmed, and the appearance was evaluated according to the following criteria.
A (passed): central portion of the surface was beautiful and had an excellent appearance.
B (failed): voids (specifically, the gap between the expanded beads) were observed at the center portion of the surface, and the appearance was poor.
C (failed): voids (specifically, the gap between the expanded beads) were remarkably observed at the center portion of the surface, and the appearance was poor.

### -Corner portion

Corner portions of the surface of the flat plate-shaped molded article (range from the corners of the molded article to a radius of 10 mm) were visually confirmed, and the appearance was evaluated according to the following criteria.
A (passed): corner portions of the surface were beautiful and had an excellent appearance.
B (failed): voids (specifically, the gap between the expanded beads) were observed at corner portions of the surface, and the appearance was poor.
C (failed): voids (specifically, the gap between the expanded beads) were remarkably observed at corner portions of the surface, and the appearance was poor.

### Evaluation of molded article

The expanded beads were evaluated as follows. The results are shown in the table.

### Density

The density of the molded article was determined by dividing the mass of the molded article by the outer dimension and converting the unit to [kg/m³].

### Molding shrinkage rate of molded article

After molding the molded article, the molded article was heated in a dryer at 160°C for 20 days. Thereafter, the dimensions of the molded article were measured, and when the lengths of the length, the width, and the thickness were set as a', b', and c', respectively, and the lengths of the length, the width, and the thickness of the dimension (internal dimension) of the mold were set as a, b, and c, respectively, the value represented by the following formulas was taken as the molding shrinkage rate (%) of the molded article. The value of the molding shrinkage rate of the molded article is smaller, indicating that the molding shrinkage is suppressed. Molding shrinkage rate (%) = [|(a - a')/a| + |(b - b')/b| + |(c - c')/c|] × 100/3

### Example 2

The procedure was the same as in Example 1 except that the addition amount of the hindered phenol-based compound with respect to 100 parts by mass of the base resin was changed to 0.1 parts by mass, and the addition amount of the organophosphorus-based compound with respect to 100 parts by mass of the base resin was changed to 0.1 parts by mass.

### Example 3

The procedure was the same as in Example 1 except that 2.5 parts by mass of carbon black was further added with respect to 100 parts by mass of the base resin during melt-kneading.

### Example 4

The procedure was the same as in Example 1 except that the addition amount of the organophosphorus-based compound with respect to 100 parts by mass of the base resin was changed to 0.4 parts by mass.

### Example 5

The procedure was the same as in Example 1 except that the addition amount of the hindered phenol-based compound with respect to 100 parts by mass of the base resin was changed to 0.4 parts by mass, and the addition amount of the organophosphorus-based compound with respect to 100 parts by mass of the base resin was changed to 0.4 parts by mass.

### Example 6

The procedure was the same as in Example 1 except that the addition amount of the hindered phenol-based compound with respect to 100 parts by mass of the base resin was changed to 0.6 parts by mass, and the addition amount of the organophosphorus-based compound with respect to 100 parts by mass of the base resin was changed to 0.6 parts by mass.

### Comparative Example 1

The procedure was the same as in Example 1 except that the organic compound-based additive (A) (hindered phenol-based compound and organophosphorus-based compound) and the iodide-based additive (X) (copper Iodide and potassium iodide) were not supplied to the extruder during melt-kneading.

### Comparative Example 2

The procedure was the same as in Example 1 except that the organic compound-based additive (A) (hindered phenol-based compound and organophosphorus-based compound) was not supplied to the extruder during melt-kneading.

### Comparative Example 3

The procedure was the same as in Example 1 except that the iodide-based additive (X) (copper iodide and potassium iodide) was not supplied to the extruder during melt-kneading.

### Comparative Example 4

The procedure was the same as in Example 1 except that the addition amount of the organic compound-based additive (A) (hindered phenol-based compound and organophosphorus-based compound) was reduced, and the addition amount of the iodide-based additive (X) (copper iodide and potassium iodide) was increased.

### Comparative Example 5

The procedure was the same as in Example 1 except that the addition amount of the iodide-based additive (X) (copper iodide and potassium iodide) was reduced.

### Comparative Example 6

The procedure was the same as in Example 1 except that the addition amount of the organic compound-based additive (A) (hindered phenol-based compound and organophosphorus-based compound) was increased.

### [Table 1]

**Table 1**

| Example No. | | | Example 1 | Example 2 | Example 3 | Example 4 | Example 5 | Example 6 |
|---|---|---|---|---|---|---|---|---|
| Base resin | Polyamide | Parts by mass | 100 | 100 | 100 | 100 | 100 | 100 |
| Colorant | Carbon black | Parts by mass | - | - | 2.5 | - | - | - |
| Cell nucleating agent | Talc | Parts by mass | 0.3 | 0.3 | 0.3 | 0.3 | 0.3 | 0.3 |
| Organic compound-based additive (A) | Hindered phenol-based compound (A1) | Parts by mass | 0.2 | 0.1 | 0.2 | 0.2 | 0.4 | 0.6 |
| | Organophosphorus-based compound (A2) | Parts by mass | 0.2 | 0. 1 | 0.2 | 0.4 | 0.4 | 0.6 |
| | Amount added | Parts by mass | 0.4 | 0.2 | 0.4 | 0.6 | 0.8 | 1.2 |
| | Ratio of addtion amounts (organophosphorus-based compound (A2)/hindered phenol-based compound (A1)) | - | 1.0 | 1.0 | 1.0 | 2.0 | 1.0 | 1.0 |
| Iodide-based additive (X) | Copper iodide | Parts by mass | 0.05 | 0. 05 | 0. 05 | 0.05 | 0.05 | 0.05 |
| | Potassium iodide | Parts by mass | 0.2 | 0.2 | 0.2 | 0.2 | 0.2 | 0.2 |
| Ratio of addition amounts (organic compound-based additive (A)/iodide-based additive (X)) | | - | 1.6 | 0.8 | 1.6 | 2.4 | 3.2 | 4.8 |
| Expanding conditions | Expanding temperature | ° C | 131.5 | 131.5 | 131.5 | 131.5 | 131.5 | 131.5 |
| | Expanding pressure | MPa | 4 | 4 | 4 | 4 | 4 | 4 |
| Expanded beads | Apparent density | kg/m³ | 69 | 70 | 71 | 68 | 67 | 67 |
| Molded article | Density | kg/m³ | 63 | 66 | 68 | 70 | 64 | 68 |
| | Shrinkage rate after heating at 160° C for 20 days | % | 0.2 | 0.3 | 0.2 | 0.2 | 0.2 | 0.3 |

### [Table 2]

**Table 2**

| Comparative Example No. | | | Comparative Example 1 | Comparative Example 2 | Comparative Example 3 | Comparative Example 4 | Comparative Example 5 | Comparative Example 6 |
|---|---|---|---|---|---|---|---|---|
| Base resin | Polyamide | Parts by mass | 100 | 100 | 100 | 100 | 100 | 100 |
| Colorant | Carbon black | Parts by mass | - | - | - | - | - | - |
| Cell nucleating agent | Talc | Parts by mass | 0.3 | 0.3 | 0.3 | 0.3 | 0.3 | 0.3 |
| Organic compound-based additive (A) | Hindered phenol-based compound (A1) | Parts by mass | - | - | 0.2 | 0.05 | 0.2 | 3 |
| | Organophosphorus-based compound (A2) | Parts by mass | - | - | 0.2 | 0.05 | 0.2 | 3 |
| | Amount added | Parts by mass | - | - | 0.4 | 0.1 | 0.4 | 6 |
| | Ratio of addtion amounts (organophosphorus-based compound (A2)/hindered phenol-based compound (A1)) | - | - | - | 1.0 | 1.0 | 1.0 | 1.0 |
| Iodide-based additive (X) | Copper iodide | Parts by mass | - | 0.05 | - | 0.1 | 0.01 | 0.05 |
| | Potassium iodide | Parts by mass | - | 0.2 | - | 0.4 | 0.04 | 0.2 |
| Ratio of addition amounts (organic compound-based additive (A)/iodide-based additive (X)) | | - | - | - | - | 0.2 | 8 | 24 |
| Expanding conditions | Expanding temperature | ° C | 131.5 | 131.5 | 131.5 | 131.5 | 131.5 | 131.5 |
| | Expanding pressure | MPa | 4 | 4 | 4 | 4 | 4 | 4 |
| Expanded beads | Apparent density | kg/m³ | 82 | 83 | 76 | 79 | 71 | 88 |
| Molded article | Density | kg/m³ | 76 | 81 | 75 | 76 | 70 | 72 |
| | Shrinkage rate after heating at 160° C for 20 days | % | 4.0 | 0.5 | 4.5 | 0.2 | 3.5 | 0.2 |

### [Table 3]

**Table 3**

| Example No. | | Example 1 | | | | Example 2 | | | | Example 3 | | | |
|---|---|---|---|---|---|---|---|---|---|---|---|---|---|
| Evaluation | | Fusion bondability | Recover ability | Surface property | | Fusion bondabi lity | Recover ability | Surface property | | Fusion bondabi lity | Recover ability | Surface property | |
| | | | | Central portion | Corner portion | | | Central portion | Corner portion | | | Central portion | Corner portion |
| Molding pressure MPa | 0.10 | A | A | A | B | B | A | B | B | A | A | A | B |
| | 0.12 | A | A | A | A | A | A | A | A | A | A | A | A |
| | 0.14 | A | A | A | A | A | A | A | A | A | A | A | A |
| | 0.16 | A | C | A | A | A | C | A | A | A | C | A | A |
| | 0.18 | - | - | - | - | - | - | - | - | - | - | - | - |
| Evaluation of moldable pressure | | A | | | | A | | | | A | | | |

### [Table 4]

**Table 4**

| Example No. | | Example 4 | | | | Example 5 | | | | Example 6 | | | |
|---|---|---|---|---|---|---|---|---|---|---|---|---|---|
| Evaluation | | Fusion bondabi lity | Recover ability | Surface property | | Fusion bondabi lity | Recover ability | Surface property | | Fusion bondabi lity | Recover ability | Surface property | |
| | | | | Central portion | Corner portion | | | Central portion | Corner portion | | | Central portion | Corner portion |
| Molding pressure MPa | 0.10 | A | A | A | B | A | A | A | B | A | A | A | B |
| | 0.12 | A | A | A | A | A | A | A | A | A | A | A | A |
| | 0.14 | A | A | A | A | A | A | A | A | A | A | A | A |
| | 0.16 | A | C | A | A | A | C | A | A | A | C | A | A |
| | 0.18 | - | - | - | - | - | - | - | - | - | - | - | - |
| Evaluation of moldable pressure | | A | | | | A | | | | A | | | |

### [Table 5]

**Table 5**

| Comparative Example No. | | Comparative Example 1 | | | | Comparative Example 2 | | | | Comparative Example 3 | | | |
|---|---|---|---|---|---|---|---|---|---|---|---|---|---|
| Evaluation | | Fusion bondabi lity | Recover ability | Surface property | | Fusion bondabi lity | Recover ability | Surface property | | Fusion bondabi lity | Recover ability | Surface property | |
| | | | | Central portion | Corner portion | | | Central portion | Corner portion | | | Central portion | Corner portion |
| Molding pressure MPa | 0.10 | - | - | - | - | - | - | - | - | - | - | - | - |
| | 0.12 | A | A | C | C | A | A | A | C | A | A | A | C |
| | 0.14 | A | A | A | C | A | A | A | C | A | A | A | A |
| | 0.16 | C | C | C | C | A | A | A | A | A | C | A | A |
| | 0.18 | - | - | - | - | A | C | A | A | - | - | - | - |
| Evaluation of moldable pressure | | C | | | | B | | | | B | | | |

### [Table 6]

**Table 6**

| Comparative Example No. | | Comparative Example 4 | | | | Comparative Example 5 | | | | Comparative Example 6 | | | |
|---|---|---|---|---|---|---|---|---|---|---|---|---|---|
| Evaluation | | Fusion bondabi lity | Recover ability | Surface property | | Fusion bondabi l ity | Recover ability | Surface property | | Fusion bondabi lity | Recover ability | Surface property | |
| | | | | Central portion | Corner portion | | | Central portion | Corner portion | | | Central portion | Corner portion |
| Molding pressure MPa | 0.10 | - | - | - | - | - | - | - | - | - | - | - | - |
| | 0.12 | A | A | A | C | A | A | A | C | A | A | A | C |
| | 0.14 | A | A | A | C | A | A | A | C | A | A | A | C |
| | 0.16 | A | A | A | A | A | A | A | A | C | C | C | C |
| | 0.18 | A | C | A | A | A | C | A | A | - | - | - | - |
| Evaluation of moldable pressure | | B | | | | B | | | | C | | | |

As understood from Tables 1 and 2, the expanded beads of Examples are expanded at a high magnification, have a good lightweight property, and are also excellent in moldability. In addition, the molded articles of Examples have a low density, a good lightweight property, a small shrinkage rate after heating, and excellent heat resistance.

As understood from Tables 3 to 6, the molded articles of Examples have excellent surface properties and are obtained in a wide molding pressure range. In addition, the molded articles of Examples are excellent in moldability even under low molding pressure conditions. This is because in Examples, the organic compound-based additive (A) and the iodide-based additive (X) are added at a predetermined ratio to the base resin during melt-kneading.

In addition, the present examples use no end-capping agent such as a carbodiimide compound and use a polyamide-based resin in which a functional group at a molecular chain end is not blocked (that is, easily hydrolyzed), but the moldability is excellent. This is considered to be because the organic compound-based additive (A) and the iodide-based additive (X) are used in combination at a predetermined ratio as described above. It is considered that hydrolysis is suppressed by using the end-capping agent, thus further improving the moldability. For the density and shrinkage rate of the molded articles in Tables 1 and 2, molded articles obtained at the lowest molding pressure among the molded articles having passed all the evaluations in Tables 3 to 6 were used, and for Comparative Examples in which molded articles having passed all the evaluations were not obtained, molded articles having failed in the moldability but obtained at the molding pressure with the best evaluation were used.

In Comparative Example 1, the organic compound-based additive (A) and the iodide-based additive (X) are not added, and thus the heat resistance is poor and the moldability is also poor.

In Comparative Example 2, the iodide-based additive (X) was added, but the organic compound-based additive (A) was not added. Therefore, the moldability is insufficient.

In Comparative Example 3, the organic compound-based additive (A) was added, but the iodide-based additive (X) was not added. Therefore, the heat resistance is poor, and the moldability is also insufficient.

In Comparative Example 4, the addition amount of the organic compound-based additive (A) is small, and the ratio of the addition amount of the organic compound-based additive (A) with respect to the addition amount of the iodide-based additive (X) is too low. Therefore, the in-mold moldability is insufficient.

In Comparative Example 5, the addition amount of the iodide-based additive (X) is small, and the ratio of the addition amount of the organic compound-based additive (A) with respect to the addition amount of the iodide-based additive (X) is too high. Therefore, the heat resistance is poor, and the in-mold moldability is also insufficient.

In Comparative Example 6, the addition amount of the organic compound-based additive (A) is large, and the ratio of the addition amount of the organic compound-based additive (A) with respect to the amount of the iodide-based additive (X) is too high. Therefore, the in-mold moldability is insufficient.

As described above, the organic compound-based additive (A) made of a hindered phenol-based compound and/or an organophosphorus-based compound and the iodide-based additive (X) made of copper iodide, or copper iodide and potassium iodide are added to the base resin during melt-kneading, and the addition amounts thereof are adjusted, thereby allowing to produce a polyamide resin expanded molded article having excellent heat resistance and a lightweight property, and allowing to provide expanded beads having excellent moldability.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method for producing polyamide-based resin expanded beads containing a polyamide-based resin as a base resin, the method comprising:
preparing polyamide-based resin particles by granulating a polyamide-based resin melt obtained by melt-kneading the base resin, an organic compound-based additive (A) made of a hindered phenol-based compound (A1) and/or an organophosphorus-based compound (A2), and an iodide-based additive (X) made of a copper iodide, or made of copper iodide and potassium iodide; and
producing polyamide-based resin expanded beads by expanding the polyamide-based resin particles with a blowing agent, wherein
an addition amount of the organic compound-based additive (A) is 0.05 parts by mass or more and 5 parts by mass or less with respect to 100 parts by mass of the base resin, and
a ratio of the addition amount of the organic compound-based additive (A) with respect to an addition amount of the iodide-based additive (X) is 0.3 or more and 7 or less.

2. The method for producing polyamide-based resin expanded beads according to claim 1, wherein the ratio of the addition amount of the organic compound-based additive (A) with respect to the addition amount of the iodide-based additive (X) is 1 or more and 4 or less.

3. The method for producing polyamide-based resin expanded beads according to claim 1 or 2, wherein the polyamide-based resin melt contains the hindered phenol-based compound (A1) and the organophosphorus-based compound (A2) as the organic compound-based additive (A), and a ratio of an addition amount of the organophosphorus-based compound (A2) with respect to an addition amount of the hindered phenol-based compound (A1) is 0.5 or more and 2 or less.

4. The method for producing polyamide-based resin expanded beads according to any one of claims 1 to 3, wherein an addition amount of the iodide-based additive (X) is 0.1 parts by mass or more with respect to 100 parts by mass of the base resin.

5. The method for producing polyamide-based resin expanded beads according to any one of claims 1 to 4, wherein the polyamide-based resin melt further contains carbon black, and an addition amount of the carbon black is 0.5 parts by mass or more and 10 parts by mass or less with respect to 100 parts by mass of the base resin.

6. The method for producing polyamide-based resin expanded beads according to any one of claims 1 to 5, wherein the hindered phenol-based compound (A1) comprises a compound represented by the following general formula (1).

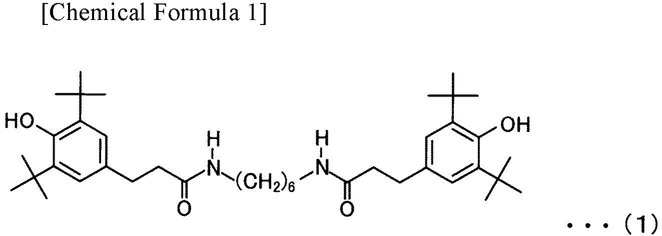

7. The method for producing polyamide-based resin expanded beads according to any one of claims 1 to 6, wherein the organophosphorus-based compound (A2) comprises a compound represented by the following general formula (2).

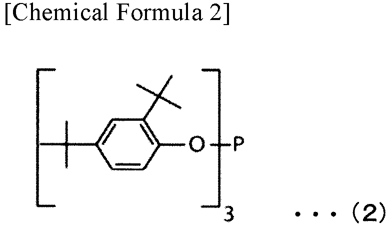

8. A method for producing a polyamide-based resin expanded molded article, wherein the polyamide-based resin expanded molded article is produced by in-mold molding of polyamide-based resin expanded beads produced by the method according to any one of claims 1 to 7.
